# EUROPÄISCHE PATENTANMELDUNG

(11) **EP 3 533 308 A1**
(43) Veröffentlichungstag der Anmeldung: **04.09.2019**
(21) Anmeldenummer: 18159836.8
(22) Anmeldetag: 02.03.2018
(51) Int. Cl.: A01C 1/02, A01G 7/00, A01G 9/029

(54) **BEPROBUNGSVORRICHTUNG ZUM ANZIEHEN UND BEPROBEN VON KEIMLINGEN VON PFLANZEN**

(71) Anmelder: KWS SAAT SE, 37574 Einbeck (DE)
(72) Erfinder: Strauss, Joachim, 37574 Einbeck (DE)

(57) **Zusammenfassung**

Die Erfindung betrifft Beprobungsvorrichtung (1) zum Anziehen und Beproben von Keimlingen (100) von Pflanzen, mit einem Fußteil (2), und einer Schneideinrichtung (4) zum Zertrennen von Keimlingen (100) oberhalb der Wurzel (104), vorzugsweise im Bereich des Sprosses, besonders bevorzugt im Bereich des Hypokotyls. Die Schneideinrichtung (4) weist ein Schneidbrett-Unterteil (6) und ein auf dem Schneidbrett-Unterteil (6) angeordnetes Schneidbrett-Oberteil (10) auf, die zum Zertrennen der Keimlinge (100) gegeneinander verschiebbar sind oder zwischen denen eine Schneide (14) zum Zertrennen der Keimlinge (100) einschiebbar ist. Das Schneidbrett-Unterteil (6) weist eine erste Mehrzahl an Durchlässen (8) und das Schneidbrett-Oberteil (10) weist eine zweite Mehrzahl an Durchlässen (12) auf. Die Durchlässe der ersten Mehrzahl an Durchlässen (8) im Schneidbrett-Unterteil (6) verjüngen sich zum Schneidbrett-Oberteil (10) hin, und das Schneidbrett-Oberteil (10) weist an wenigstens einem der Durchlässe der zweiten Mehrzahl an Durchlässen (12) wenigstens ein Positionierelement (16) zum Positionieren von Aufnahmebehältern (20) zum Aufnehmen der abgetrennten Sprosse (102) oder Sprossteile der Keimlinge (100) auf. Die Erfindung betrifft ferner ein Verfahren sowie eine Verwendung.

## Beschreibung

Die Erfindung betrifft eine Beprobungsvorrichtung zum Anziehen und Beproben von Keimlingen und Pflanzen mit einem Fußteil, und einer Schneideinrichtung zum Zertrennen von Keimlingen oberhalb der Wurzel, vorzugsweise im Bereich des Sprosses, besonders bevorzugt im Bereich des Hypokotyls. Ferner betrifft die Erfindung ein Verfahren zum Anziehen und Beproben von Keimlingen mit einer Beprobungsvorrichtung der eingangs genannten Art, sowie eine Verwendung einer Beprobungsvorrichtung der eingangs genannten Art.

Beprobungsvorrichtungen der vorstehenden Art werden dazu verwendet Keimlinge von Pflanzen anzuziehen und anschließend zu beproben. Auf diese Weise kann Saatgut, insbesondere Samen, getestet werden, um beispielsweise bestimmte agronomische, physiologische, genetische, phänotypische oder morphologische Merkmale zu analysieren. Hierbei ist einerseits wichtig, dass die einzelnen Keimlinge voneinander getrennt sind, sodass keine Kontamination von Proben untereinander stattfindet. Zum anderen ist eine saubere Trennung der Keimlinge wichtig, auch um Bestandteile mit mütterlichen DNA von der Probe fernzuhalten. Insbesondere ist es wichtig, dass das Perikarp nicht mit in die Probe gelangt, um eine Kontamination der Probe zu verhindern.

Aus DE 10 2013 100 261 A1 ist ein System zum Ernten von biologischen Proben bekannt. Das System umfasst eine obere und untere Multiwell-Platte, die aufeinander gesetzt sind. Das Saatgut wird in die untere Multiwell-Platte gegeben und der Keimling wächst dann in die obere Multiwell-Platte hinein. Um eine Kontamination zu verhindern erstreckt sich die obere Multiwell-Platte teilweise in die untere Multiwell-Platte. Es ist also zum Trennen der Keimlinge erforderlich, dass die obere Multiwell-Platte angehoben wird um einen Spalt zwischen der oberen und unteren Multiwell-Platte zu bilden. Hierbei können die einzelnen Keimlinge leicht beschädigt werden und auch ist ein "Verwachsen" von einem Keimling in ein Tube der oberen Multiwell-Platte, dass für einen anderen Keimling vorgesehen ist, möglich. Weiterhin ist bei dem gezeigten System aus DE 10 2013 100 261 A1 die Nährstoffversorgung der Keimlinge aufwendig, da diese separat in den einzelnen Tubes der unteren Multiwell-Platte vorgenommen werden muss.

Ein anderes System ist aus WO 2012/096 568 A1 bekannt. Dort ist eine Beprobungsvorrichtung offenbart, die eine Stützplatte mit einer Mehrzahl an Pflanzen aufweist, die in einem Gitternetz angeordnet sind. Oberhalb der Pflanzen sind mehrere Scheiben angeordnet, die miteinander fluchtende Öffnungen aufweisen. Zum Zertrennen der einzelnen Keimlinge kann dann entweder eine dieser Scheiben herausgezogen werden, oder zwischen den Scheiben werden Messer durchgeführt. Bei dieser Vorrichtung besteht das Problem, dass Perikarp nicht abgestreift wird, und auch ein Zuordnen von getrennten Keimlingen zu einzelnen Gefäßen, beispielsweise Tubes, ist nicht ohne weiteres möglich. Das dort offenbarte System funktioniert gut für Sammelbeprobung, bei dem eine Einzelanalyse eines einzelnen Keimlings nicht erforderlich ist.

Aufgabe der vorliegenden Erfindung ist es, eine Beprobungsvorrichtung der eingangs genannten Art bereitzustellen, mit der eine einfache und zuverlässige Beprobung und ein homogenes Anziehen der Keimlinge möglich ist, vorzugsweise ohne dass eine permanente Pflege notwendig ist. Dabei soll möglichst sichergestellt werden, dass seitliches Verwachsen von Keimlingen nicht möglich ist und eine Probenkontamination weitestgehend verhindert ist.

Die Erfindung löst die Aufgabe bei einer Beprobungsvorrichtung der eingangs genannten Art dadurch, dass die Schneideinrichtung ein Schneidbrett-Unterteil und ein auf dem Schneidbrett-Unterteil angeordnetes Schneidbrett-Oberteil aufweist, die zum Zertrennen der Keimlinge gegeneinander verschiebbar sind oder zwischen denen eine Schneide zum Zertrennen der Keimlinge einschiebbar ist, wobei das Schneidbrett-Unterteil eine erste Mehrzahl an Durchlässen und das Schneidbrett-Oberteil eine zweite Mehrzahl an Durchlässen aufweist, und die erste Mehrzahl an Durchlässen mit der zweiten Mehrzahl an Durchlässen ausgerichtet sind, wobei sich die Durchlässe der ersten Mehrzahl an Durchlässen im Schneidbrett-Unterteil zum Schneidbrett-Oberteil hin verjüngen und das Schneidbrett-Oberteil an wenigstens einem der Durchlässe der zweiten Mehrzahl an Durchlässen wenigstens ein Positionierelement zum Positionieren von Aufnahmebehältern zum Aufnehmen der abgetrennten Sprosse oder Sprossteile der Keimlinge aufweist.

In einem bevorzugten Ausführungsbeispiel ist in der Schneideinrichtung das Schneidbrett-Unterteil und das Schneidbrett-Oberteil fest miteinander verbunden oder als ein einteiliges Element ausgebildet, wobei zum Zertrennen der Keimlinge zwischen dem Schneidbrett-Unterteil und Schneidbrett-Oberteil eine Schneide einschiebbar ist.

Das Schneidbrett-Unterteil dient einerseits dazu die einzelnen Keimlinge sicher voneinander zu trennen, sodass ein Verwachsen von Keimlingen verhindert werden kann. Hierzu sind die Durchlässe der ersten Mehrzahl an Durchlässen vorzugsweise so ausgebildet, dass sie sich zum Schneidbrett-Oberteil hin verjüngen. Durch die Verjüngung der Durchlässe der ersten Mehrzahl an Durchlässen findet eine Führung der Keimlinge statt. Gleichzeitig soll durch die Verjüngung eine Einengung der Sprosse beim Wachsen erreicht werden, wodurch das Perikarp, das an den Sprossen anhaftet, abgestreift werden kann. Es ist entscheidend, dass das Perikarp unterhalb der Schneide, d.h. im Bereich des Fußteils oder Schneidbrett-Unterteils abgestreift wird.

Das Schneidbrett-Oberteil weist Durchlässe einer zweiten Mehrzahl an Durchlässen auf, die mit bzw. an den Durchlässen der ersten Mehrzahl an Durchlässen ausgerichtet sind. Vorzugsweise fluchten die Durchlässe der ersten Mehrzahl an Durchlässen mit den Durchlässen der zweiten Mehrzahl an Durchlässen. An wenigstens einem der Durchlässe der zweiten Mehrzahl an Durchlässen ist ein Positionierelement angeordnet, um einen Aufnahmebehälter zum Aufnehmen der abgetrennten Sprosse oder Sprossteile der Keimlinge auszurichten. Es kann vorgesehen sein, dass an jedem der Durchlässe der zweiten Mehrzahl an Durchlässen, oder einer Untermenge zum Beispiel bei jedem zweiten der Durchlässe der zweiten Mehrzahl an Durchlässen, ein Positionierelement angeordnet ist. Durch das Positionierelement wird ein definiertes Positionieren der Aufnahmebehälter zum Aufnehmen der abgetrennten Sprosse oder Sprossteile erreicht.

Grundsätzlich ist es beim Beproben von Keimlingen möglich überall entlang der Sprossachse (z.B. im Bereich des Hypokotyls) oder auch im Bereich der Blätter zu beproben. Hierfür ist dann eine Variation der Schnittebene erforderlich. Dies kann dadurch gelöst werden, dass ein Abstand zwischen Fußteil und Schneidbrett-Unterteil variiert wird, oder die Höhe des Schneidbrett-Unterteils variiert wird.

Als Spross wird vorliegend der aus Sprossachse und Blättern bestehende, meist oberirdisch wachsenden, Teil des Kormus verstanden. Unter Hypokotyl wird vorliegend der unterste Abschnitt der Sprossachse einer Samenpflanze vom Wurzelhals bis zu den Kotyledonen verstanden.

Ist die Beprobungsvorrichtung so ausgebildet, dass das Schneidbrett-Unterteil und das Schneidbrett-Oberteil zum Zertrennen der Keimlinge gegeneinander verschiebbar sind, kann vorgesehen sein, dass zwischen diesen ein Trennelement eingeschoben werden kann, um eine Kontamination zu verhindern. Das Trennelement kann grundsätzlich ähnlich der Schneide ausgebildet sein. Diese Variante eignet sich insbesondere bei Keimlingen, die keine besonders harte Sprossachse aufweisen.

In einer ersten bevorzugten Ausführungsform weist die Beprobungsvorrichtung einen Keimträger für Samen oder Keimlinge auf, der zwischen dem Fußteil und der Schneideinrichtung angeordnet ist und aus einem saugfähigen Material zum Speichern von Flüssigkeit gebildet ist. Der Keimträger weist vorzugsweise eine dritte Mehrzahl an Vertiefungen auf, wobei Zentralachsen der dritten Mehrzahl an Vertiefungen mit der ersten Mehrzahl an Durchlässen fluchten. Die Vertiefungen sind vorzugsweise dazu ausgebildet Samen oder Keimlinge aufzunehmen. Vorzugsweise sind die Vertiefungen in einem 24er-Well-Format, einem 48er-Well-Format, einem 96er-Well-Format, einem 192er-Well-Format oder einem 384er-Well-Format angeordnet. Die Auswahl des entsprechenden Formats ist abhängig von der Größe der auszulegenden Samen und/oder von der Anzahl der zu beprobenden Keimlinge und kann je nach Anwendung ausgewählt werden. Vorzugsweise weist der Keimträger etwa 1 bis 400 Vertiefungen auf.

Die einzelnen Vertiefungen sind vorzugsweise voneinander separiert. Vorzugsweise ist der Keimträger so ausgebildet, dass ein seitliches Verwachsen von Keimlingen verhindert ist. Die Vertiefungen in dem Keimträger sind vorzugsweise so ausgebildet, dass die Keimlinge nur gerade nach oben wachsen können, in den entsprechenden Durchlass der ersten Mehrzahl an Durchlässen im Schneidbrett-Unterteil hinein. Hierdurch kann sichergestellt werden, dass ein Keimling aus einer Vertiefung des Keimträgers nicht in einen benachbarten Durchlass der ersten Mehrzahl an Durchlässen hineinwachsen kann. Hierdurch kann sichergestellt werden, dass die einzelnen Proben sich nicht gegenseitig kontaminieren.

Weiterhin ist bevorzugt, dass der Keimträger ein Altpapiermaterial aufweist oder aus diesem gebildet ist. Altpapiermaterial eignet sich besonders, da es einerseits aus ökologischen Gründen bevorzugt ist, andererseits ist das Material saugfähig. Das Altpapiermaterial kann auch durch ein anderes saugfähiges Material ersetzt werden. Das Material des Keimträgers kann eine Dicke von 0,5 mm bis 5 mm, bevorzugt von 1 mm bis 2 mm haben, besonders bevorzugt von 1,2 mm bis 1,5 mm. Als bevorzugt hat sich eine Dichte im Bereich von 0,2 g/cm³ bis 0,7 g/cm³ herausgestellt. Besonders bevorzugt liegt die Dichte etwa im Bereich von 0,3 g/cm³ bis 0,4 g/cm³. Die Saugfähigkeit des Materials des Keimträgers sollte so ausgewählt sein, dass dieser bei Aussaat gewässert wird und bis zur Beprobung der Keimlinge ausreichend Flüssigkeit speichert bzw. den wachsenden Keimlingen bereitstellt. Ein typischer Zeitrahmen liegt bis zur Beprobung zwischen ein bis zehn Tagen, beispielsweise für Keimlinge von *Beta* sp., insbesondere *Beta vulgaris,* bei etwa fünf bis sieben Tagen oder für Keimlinge von *Brassica* sp., insbesondere *Brassica napus,* bei etwa 4 bis 5 Tagen.

In einer bevorzugten Ausgestaltung der vorliegenden Erfindung sind die Aufnahmebehälter als einseitig offene Laborröhrchen (Tubes) ausgebildet und in einem Halter (Rack) mit ihrer Öffnung proximal zum Schneidbrett-Oberteil gehalten. Die Aufnahmebehälter sind vorzugsweise derart dimensioniert, dass die Keimlinge einwachsen können, ohne dass sie an die Unterseite der Aufnahmebehälter über längere Zeit, beispielsweise mehr als einem Tag, anliegen. Dies würde einen möglichen Pilzbefall deutlich begünstigen. Zudem verhindert dies auch, dass die beprobten Sprosse oder Sprossteile später aus den Aufnahmebehältern herausragen, was ein Verschließen deutlich erleichtert, da hierbei überstehende Sprosse oder Sprossteile von dem Verschluss nicht erfasst bzw. gequetscht werden. Ein besonders bevorzugtes Tube-Rack ist das FluidX der Fa. Brooks Life Science Systems, Großbritannien. Möglich sind auch Deepwell-Boxen, die keine Einzeltubes haben. Auf diese Weise können die Keimlinge direkt in die Tubes hineinwachsen. In der Regel sind die Tubes mit ihrer Öffnung nach unten auf das Schneidbrett-Oberteil aufgesetzt, so dass die Keimlinge von unten in die Öffnung der Tube hineinwachsen.

Wird nun die Schneide eingeführt oder das Schneidbrett-Oberteil gegen das Schneidbrett-Unterteil verschoben, um die Keimlinge zu zertrennen, verbleibt der abgetrennte Spross oder Sprossteil in dem Tube, während die Wurzel oder der nicht abgetrennte Sprossteil in dem Keimträger oder dem Schneidbrett-Unterteil verbleibt. Ein Bediener muss dann lediglich die Aufnahmebehälter, vorzugsweise gemeinsam mit dem Schneidbrett-Oberteil, um 180° drehen, sodass die Öffnungen der Tubes wieder nach oben zeigen und mit entsprechenden Verschlüssen verschlossen werden können. Auf diese Weise ist eine besonders einfache Übertragung von Sprossen oder Sprossteilen in Aufnahmebehälter möglich, insbesondere direkt in ein laborübliches Well-Format.

In einer weiteren bevorzugten Weiterbildung weist die Schneideinrichtung eine Führung für die Schneide oder eine Führung für das Verschieben des Schneidbrett-Oberteil zu dem Schneidbrett-Unterteil auf. Die Schneide ist vorzugsweise als Messer ausgebildet, oder als ein anderes Element, das zum Zertrennen von Keimlingen geeignet ist. Die Führung dient dazu die Schneide bzw. das Schneidbrett-Oberteil beim Schneidprozess zu führen, sodass die einzelnen Keimlinge sicher getrennt werden können. Vorzugsweise ist die Führung am Schneidbrett-Unterteil ausgebildet. Hierdurch kann sichergestellt werden, dass die Schneide bzw. das Schneidbrett-Oberteil nah an dem Schneidbrett-Unterteil gehalten ist und kein Wurzelmaterial oder Perikarp in den Aufnahmebehältern gelangt.

Damit die Schneide zwischen Schneidbrett-Unterteil und Schneidbrett-Oberteil durchgeführt werden kann, ist vorzugsweise ein Spalt zwischen diesen vorgesehen, beispielsweise durch entsprechende Abstandshalter. Der Spalt zwischen dem Schneidbrett-Unterteil und dem Schneidbrett-Oberteil hat vorzugsweise eine Spaltweite von 0,2 bis 2 mm, besonders bevorzugt von 0,5 mm bis 1 mm. Als zweckmäßig hat sich eine Spaltweite von etwa 0,7 mm herausgestellt. Über diesen Spalt ist auch eine Belüftung der Keimlinge möglich, um Pilzbefall zu vermeiden. Vorzugsweise liegen das Schneidbrett-Unterteil und Schneidbrett-Oberteil ohne erkennbaren Spalt während des Anziehens der Keimlinge aufeinander. Erst wenn die Beprobungsvorrichtung zur Durchführung des Schneidvorgangs um 180° gedreht wird, entsteht ein Spalt zwischen Schneidbrett-Unterteil und Schneidbrett-Oberteil in einer vorbestimmten Weite, die beispielsweise durch die oben genannte Führung bestimmt wird.

Vorzugsweise ist die Schneide so dimensioniert, dass jeder Durchlass der ersten Mehrzahl an Durchlässen bei einem Einschieben der Schneide zumindest einmalig vollständig abdeckbar ist. Die Schneide kann in dieser Ausführungsform Schritt für Schritt vorgeschoben werden, und sobald beispielsweise ein Keimling oder eine Reihe an Keimlingen zertrennt ist, wird das Vorschieben der Schneide gestoppt und die Beprobungsvorrichtung gedreht, sodass die abgetrennten Sprosse oder Sprossenteile in den Aufnahmebehälter gelangen. Anschließend wird die Beprobungsvorrichtung wieder herumgedreht, und die Schneide ein Schritt weiter vorgeschoben. Alternativ wird die Beprobungsvorrichtung nicht gedreht, aber die Aufnahmebehälter nach und nach entnommen. Auf diese Weise verdeckt die Schneide die Durchlässe der ersten Mehrzahl an Durchlässen in dem Schneidbrett-Unterteil und verhindert beim Drehen der Beprobungsvorrichtung, dass Wurzelmaterial oder Perikarp durch den entsprechenden Durchlass hindurch in den Aufnahmebehälter fallen kann. Hierdurch wird weiter sichergestellt, dass Kontamination verhindert ist.

Vorzugsweise hat die Schneide eine solche Dimension, dass in einem eingeschobenen Zustand die erste Mehrzahl an Durchlässen vollständig abdeckbar ist. Die Schneide überdeckt in dieser Ausführungsform alle Durchlässe der ersten Mehrzahl an Durchlässen, sodass in einem ersten Schritt die Schneide zum Zertrennen von sämtlichen Keimlingen eingeschoben werden kann und anschließend die Beprobungsvorrichtung gedreht wird, sodass alle abgetrennten Sprosse oder Sprossteile in den entsprechenden Aufnahmebehälter fallen, während die Durchlässe der ersten Mehrzahl an Durchlässen zum Verhindern von Kontamination durch die Schneide abgedeckt sind. In einer anderen Ausführungsform wird das Schneidbrett-Oberteil gegenüber dem Schneidbrett-Unterteil verschoben, sodass im verschobenen Zustand die erste Mehrzahl an Durchlässen vollständig durch undurchlässige Teile des Schneidbrett-Oberteils, welche sich zwischen der zweiten Mehrzahl an Durchlässen befinden, abdeckbar ist. Das Schneidbrett-Oberteil überdeckt in dieser Ausführungsform alle Durchlässe der ersten Mehrzahl an Durchlässen, sodass in einem ersten Schritt sämtliche Keimlinge durch Verschieben durchtrennt werden können und anschließend die Beprobungsvorrichtung gedreht wird, sodass alle abgetrennten Sprosse oder Sprossteile in den entsprechenden Aufnahmebehälter fallen, während die Durchlässe der ersten Mehrzahl an Durchlässen zum Verhindern von Kontamination durch das Schneidbrett-Oberteil abgedeckt sind.

Die Durchlässe der ersten Mehrzahl an Durchlässen weisen einen Querschnitt mit einer lichten Weite auf, die so ausgewählt ist, dass das Perikarp oder Teile davon von den Keimlingen abgestreift werden können. Beim Anziehen der Keimlinge tragen die Sprosse üblicherweise noch Perikarp oder Teile davon an sich, das erst bei fortschreitendem Wachstum durch Blätterwuchs abfallen kann. Bei Keimlingen allerdings ist das Perikarp oder Teile davon üblicherweise noch an den Blättern der Sprosse anhaftend, und würde somit von dem Keimträger durch das Schneidbrett-Unterteil und das Schneidbrett-Oberteil in den Aufnahmebehälter gelangen. Die Durchlässe der ersten Mehrzahl an Durchlässen weisen daher vorzugsweise eine solche lichte Weite auf, die eng genug ist um Perikarp von den Keimlingen abzustreifen. Das Perikarp trägt ausschließlich mütterliche DNA. Würde nun Perikarp mit beprobt werden, würde dies die anschließende DNA-Analyse erheblich stören. Die lichte Weite, die ausreichend ist zum Abstreifen von Perikarp, ist abhängig von der Pflanzengattung oder Pflanzenspezies. Als geeignete lichte Weite hat sich eine lichte Weite im Bereich von 1 mm bis 6 mm herausgestellt. Dies ist für die meisten Pflanzengattungen und Pflanzenspezies ausreichend. Beispielsweise hat sich eine lichte Weite von 3 mm für Keimlinge der Beta sp., insbesondere der *Beta vulgaris,* als ausreichend und optimal herausgestellt, um ein sicheres Abstreifen von Perikarp zu erreichen.

Gemäß einer weiteren bevorzugten Ausführungsform sind die Positionierelemente als ringförmiger Kragen um die jeweiligen Durchlässe des Schneidbrett-Oberteils herum ausgebildet. Der Kragen erstreckt sich vorzugsweise weg von der dem Schneidbrett-Unterteil zugewandten Seite, sodass der Kragen als Aufnahme für einen entsprechenden Aufnahmebehälter, insbesondere Laborröhrchen, geeignet ist. Der Kragen muss den jeweiligen Durchlass nicht vollständig umgeben, auch wenn dies bevorzugt ist, um Kontamination zu vermeiden. Bevorzugt ist auch, dass der Kragen zum freien Ende hin konisch zuläuft. Hierdurch kann eine leichtere Montage ermöglicht werden. Vorzugsweise überlappen der Kragen und das entsprechende Laborröhrchen sich in axialer Richtung, um ein Verwachsen eines Keimlings in ein benachbartes Laborröhrchen zu vermeiden.

Weiterhin ist bevorzugt, dass die Positionierelemente Abstandshalter zum Beabstanden der Aufnahmebehälter von dem Schneidbrett-Oberteil aufweisen. Hierdurch wird ein unmittelbares Anliegen der Aufnahmebehälter am Schneidbrett-Oberteil verhindert, und ein Spalt gebildet. Dieser Spalt dient insbesondere zur Belüftung der Keimlinge, sodass diese mit ausreichend Luft versorgt werden. Dies vermeidet unter anderem Pilzbefall. In der Praxis hat sich ein Abstand von 0,1-5 mm, vorzugweise von 0,5 bis 2 mm und besonders bevorzugt von 0,7 bis 1 mm als ausreichend erwiesen. Auch ein größerer Abstand kann vorgesehen sein, allerdings steigt mit größerem Abstand auch die Gefahr einer Kontamination. Der Abstandshalter eines Positionierelements kann als geschlossener Ring um das Positionierelement ausgebildet sein. In einer Ausführung bildet der Abstandshalter mindestens zwei, mindestens drei oder mindestens vier Auflagepunkte angrenzend an das zugehörige Positionierelement für den Aufnahmebehälter. Vorzugsweise ist in axialer Richtung das Positionierelement höher als Abstandshalter, beispielsweise mindestens doppelt so hoch. In einer bevorzugten Ausführung ist der Abstandshalter derart dimensioniert, dass der aufliegende Aufnahmebehälter wenigstens teilweise noch um die Längsachse gedreht werden kann. Dieses lose Aufliegen ermöglicht eine einfachere Entnahme des Aufnahmebehälters bzw. des Racks mit einer Vielzahl von Aufnahmebehältern (Tubes).

Eine weitere bevorzugte Ausführungsform der Beprobungsvorrichtung weist eine Haube zum Abdecken wenigstens der Schneideinrichtung samt Keimlingen auf. Die Haube dient dazu die Aufnahmebehälter zu schützen und Kontamination zu verhindern, aber soll dennoch ein Belüften ermöglichen.

Vorzugsweise weist die Haube ein Haubendach, eine sich von dem Haubendach erstreckende Seitenwand und einen die Seitenwand begrenzenden Haubenrand auf, wobei der Haubenrand dazu ausgebildet ist auf dem Fußteil aufzuliegen. Auf diese Weise bilden Fußteil und Haube insgesamt ein Gehäuse für die Beprobungsvorrichtung und schließen die Schneideinrichtung, den Keimträger und die Aufnahmebehälter in sich ein. Vorzugsweise sitzt die Haube auf dem Fußteil auf, oder ist auf diesem aufgeklemmt. Auf diese Weise ist es auch möglich die Beprobungsvorrichtung mittels der Haube zu tragen. In einer Ausführungsform weist das Haubendach auf der Innenseite eine Montagehilfseinrichtung auf, welches einen korrektes Aussetzen der Haube sicherstellt. Eine solche Montagehilfseinrichtung kann beispielsweise als vorstehender Bolzen am inneren Haubendach ausgebildet sein, wobei bei korrektem Aufsetzen der Haube der Bolzen in eine dafür vorgesehene Vertiefung an der Unterseite des Aufnahmebehälters (z.B. des Tube-Racks) greift.

Das Haubendach ist vorzugsweise so ausgebildet, dass ein Fußteil einer weiteren Beprobungsvorrichtung, mit den Merkmalen einer Beprobungsvorrichtung einer der vorstehend beschriebenen bevorzugten Ausführungsformen einer Beprobungsvorrichtung gemäß dem ersten Aspekt der Erfindung, darauf stapelbar ist. Auf diese Weise können mehrere Beprobungsvorrichtungen aufeinander gestapelt werden, wodurch der Gesamtraumbedarf verringert werden kann.

Vorzugsweise weist die Haube Stützfüße auf, die es erlauben die Haube mit dem Haubenrand nach oben und dem Haubendach nach unten aufzustellen und/oder das Fußteil der weiteren aufgestapelten Beprobungsvorrichtung gemäß einer vorstehend beschriebenen bevorzugten Ausführungsform der Beprobungsvorrichtung gemäß dem ersten Aspekt der Erfindung aufzunehmen. Die Füße dienen also einerseits dazu die Haube mit dem Haubendach nach unten aufzustellen, insbesondere dann, wenn die Beprobungsvorrichtung bereits um 180° gedreht wurde, um die Aufnahmebehälter mit ihren Öffnungen nach oben auszurichten, sodass die abgetrennten Sprosse bzw. Sprossteile in den Aufnahmebehältern zu liegen kommen. Die Haube dient in diesem Fall auch als Behälter zum Aufbewahren der Aufnahmebehälter. Andererseits dienen die Stützfüße dazu eine weitere Beprobungsvorrichtung oben auf der Haube aufzustellen, wenn die Haube mit dem Haubendach nach oben ausgerichtet ist. Die Stützfüße beabstanden dann die obere aufgesetzte Beprobungsvorrichtung und ermöglichen so eine bessere Belüftung der Keimlinge in der unteren Beprobungsvorrichtung.

Vorzugsweise weist die Haube Lüftungsschlitze und/oder Lüftungslöcher auf, um eine ausreichende Belüftung bereitzustellen. Auch hierdurch wird Pilzbefall verhindert.

Vorzugsweise weist die Beprobungsvorrichtung ferner eine Montagehilfseinrichtung auf, die ein seitenvertauschtes Montieren wenigstens der Schneideinrichtung zum Fußteil verhindert. Hierdurch kann verhindert werden, dass bei einem Abnehmen der Schneid-einrichtung von dem Fußteil, dieses nicht seitenvertauscht montiert werden kann. Auch hierdurch kann Kontamination weiter verhindert werden. Vorzugsweise verhindert die Montagehilfseinrichtung auch ein seitenvertauschtes Montieren des Keimträgers, der Aufnahmebehälter und/oder der Haube zum Fußteil bzw. zur Schneideinrichtung. Die Montagehilfseinrichtung dient also vorzugsweise dazu ein seitenvertauschtes Montieren von Einzelelementen zueinander zu verhindern. Auf diese Weise kann Kontamination weitgehend verhindert werden.

Gemäß einem zweiten Aspekt der Erfindung wird die eingangs genannte Aufgabe gelöst durch ein Verfahren zum Anziehen und Beproben von Keimlingen mit einer Beprobungsvorrichtung gemäß einer der vorstehend beschriebenen bevorzugten Ausführungsformen einer Beprobungsvorrichtung gemäß dem ersten Aspekt der Erfindung, umfassend die Schritte: Bereitstellen oder Anziehen von Keimlingen, vorzugsweise aus Samen; warten bis sich die Keimlinge bzw. der zur Beprobung vorgesehene Teil der Keimlinge (Spross oder Sprossteile) durch die erste als auch durch die zweite Mehrzahl an Durchlässen aufgrund fortschreitendem Längenwachstum durch erstrecken; Einschieben einer Schneide zwischen dem Schneidbrett-Unterteil und dem Schneidbrett-Oberteil zum Zertrennen der Keimlinge oder Verschieben des Schneidbrett-Oberteil gegenüber dem Schneidbrett-Unterteil zum Zertrennen der Keimlinge; Aufnehmen von abgetrennten Sprossen oder Sprossteilen der Keimlinge in jeweils einem Aufnahmebehälter; und entnehmen der Aufnahmebehälter aus der Beprobungsvorrichtung. Es soll verstanden werden, dass die Beprobungsvorrichtung gemäß dem ersten Aspekt der Erfindung und das Verfahren gemäß dem zweiten Aspekt der Erfindung gleiche und ähnliche Unteraspekte aufweisen, wie sie insbesondere in den abhängigen Ansprüchen niedergelegt sind. Insofern wird vollumfänglich auf die obige Beschreibung Bezug genommen.

Im Schritt des Wartens bis sich die Keimlinge durch die erste als auch durch die zweite Mehrzahl an Durchlässen durch erstrecken, ist es nicht zwingend erforderlich, dass sich die Keimlinge durch jeden der Durchlässe der ersten und zweiten Mehrzahl an Durchlässen durch erstrecken. Je nachdem, wie viele Samen verwendet wurden oder wie viele Keimlinge sich aus Samen entwickelt haben, kann auch eine gewisse geringere Anzahl an Keimlingen vorgesehen sein, sodass nicht jede Vertiefung des Keimträgers mit einem Keimling versehen ist und sich somit auch nicht durch jeden Durchlass der ersten und zweiten Mehrzahl an Durchlässen ein Keimling durch erstreckt. In einer anderen Ausführung befindet sich in mindestens einer Vertiefung des Keimträgers mehr als ein Samen, jedoch ist der entsprechende Durchlass der ersten und zweiten Mehrzahl an Durchlässen derart dimensioniert, dass nur ein Keimling hindurchwachsen kann. Somit können Ausfälle beim Keimen kompensiert werden.

Vorzugsweise umfasst das Verfahren ferner den Schritt: Wässern des Keimträgers zum Versorgen der Samen bzw. der Keimlinge mit Wasser. Vorzugsweise umfasst das Verfahren ferner den Schritt: Umdrehen der Beprobungsvorrichtung um 180° um eine Achse, die senkrecht zur Längserstreckung der Aufnahmebehälter ausgerichtet ist, sodass die Aufnahmebehälter mit ihren Öffnungen nach oben ausgerichtet sind. Dieser Schritt wird vorzugsweise nach dem Einschieben der Schneide und vor Herausziehen der Schneide durchgeführt oder nach dem Verschieben des Schneidbrett-Oberteils gegenüber dem Schneidbrett-Unterteil zum Zertrennen der Keimlinge.

Vorzugsweise wird das Verfahren automatisiert bzw. semi-automatisiert durchgeführt. So ist es beispielsweise bevorzugt, dass Samen mittels einer automatisierten Saatvorrichtung in entsprechende Vertiefungen des Keimträgers eingebracht werden. Bevorzugt ist auch, dass das Einschieben der Schneide sowie das Umdrehen der Beprobungsvorrichtung automatisiert erfolgen. Es kann vorgesehen sein, dass einzelne Beprobungsvorrichtungen dazu auf einem Transportband transportiert werden und dann mittels einer automatisierten Vorrichtung eine Schneide eingeschoben wird, anschließend die Beprobungsvorrichtung gedreht wird und die Aufnahmebehälter, die vorzugsweise als Tubes in einem Tube-Rack ausgebildet sind, entnommen werden. Üblicherweise sind solche Tubes eines Tube-Racks mit Barcodes oder QR-Codes versehen, die die entsprechende Probe identifizieren. Es kann vorgesehen sein, dass diese Barcodes oder QR-Codes automatisiert ausgelesen werden. Üblicherweise werden die abgetrennten Sprosse oder Sprossteile weiterverarbeitet und beispielsweise einer DNA-Analyse unterzogen. Auch der Transport der Aufnahmebehälter zu dem Ort der späteren DNA-Analyse kann automatisiert, insbesondere unter Verwendung der Barcodes oder QR-Codes auf den Tubes oder den Tube-Racks erfolgen.

Gemäß einem dritten Aspekt der Erfindung wird die eingangs genannte Aufgabe gelöst durch eine Verwendung einer Beprobungsvorrichtung nach einer der vorstehend beschriebenen bevorzugt Ausführungsformen einer Beprobungsvorrichtung gemäß dem ersten Aspekt der Erfindung zum Anziehen von Keimlingen vorzugsweise einer Pflanze ausgewählt aus den Gattungen: Hordeum, Sorghum, Saccharum, Zea, Setaria, Oryza, Triticum, Secale, Triticale, Malus, Brachypodium, Aegilops, Daucus, Beta, Eucalyptus, Nicotiana, Solanum, Coffea, Vitis, Erythrante, Genlisea, Cucumis, Marus, Arabidopsis, Crucihimalaya, Cardamine, Lepidium, Capsella, Olmarabidopsis, Arabis, Brassica, Eruca, Raphanus, Citrus, Jatropha, Populus, Medicago, Cicer, Cajanus, Phaseolus, Glycine, Gossypium, Astragalus, Lotus, Torenia, Allium, und/oder Helianthus, vorzugsweise ist die Pflanze ausgewählt aus den Spezies: *Hordeum vulgare, Hordeum bulbusom, Sorghum bicolor, Saccharum officinarium, Zea* spp., umfassend *Zea mays, Setaria italica, Oryza minuta, Oryza sativa, Oryza australiensis, Oryza alta, Triticum aestivum, Triticum durum, Secale cereale,* Triticale, *Malus domestica, Brachypodium distachyon, Hordeum marinum, Aegilops tauschii, Daucus glochidiatus, Beta* spp., umfassend *Beta vulgaris, Daucus pusillus, Daucus muricatus, Daucus carota, Eucalyptus grandis, Nicotiana sylvestris, Nicotiana tomentosiformis, Nicotiana tabacum, Nicotiana benthamiana, Solanum lycopersicum, Solanum tuberosum, Coffea canephora, Vitis vinifera, Erythrante guttata, Genlisea aurea, Cucumis sativus, Marus notabilis, Arabidopsis arenosa, Arabidopsis lyrata, Arabidopsis thaliana, Crucihimalaya himalaica, Crucihimalaya wallichii, Cardamine nexuosa, Lepidium virginicum, Capsella bursa pastoris, Olmarabidopsis pumila, Arabis hirsute, Brassica napus, Brassica oleracea, Brassica rapa, Raphanus sativus, Brassica juncacea, Brassica nigra, Eruca vesicaria subsp. sativa, Citrus sinensis, Jatropha curcas, Populus trichocarpa, Medicago truncatula, Cicer yamashitae, Cicer bijugum, Cicer arietinum, Cicer reticulatum, Cicer judaicum, Cajanus cajanifolius, Cajanus scarabaeoides, Phaseolus vulgaris, Glycine max, Gossypium* sp., *Astragalus sinicus, Lotus japonicas, Torenia fournieri, Allium cepa, Allium fistulosum, Allium sativum, Helianthus annuus, Helianthus tuberosus und*/*oder Allium tuberosum,* besonders bevorzugt sind *Beta vulgaris, Zea mays, Triticum aestivum, Hordeum vulgare, Secale cereale, Helianthus annuus, Solanum tuberosum, Sorghum bicolor, Brassica rapa, Brassica napus, Brassica juncacea, Brassica oleracea, Raphanus sativus, Oryza sativa, Glycine max* und/oder *Gossypium* sp..

Eine Ausführungsform der Erfindung wird nun nachfolgend anhand der Zeichnungen beschrieben. Diese sollen die Ausführungsform nicht notwendigerweise maßstäblich darstellen, vielmehr sind die Zeichnungen, wo zur Erläuterung dienlich, in schematisierter und/oder leicht verzerrter Form ausgeführt. Im Hinblick auf Ergänzungen der aus der Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail der Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsform sowie anhand der Zeichnungen; diese zeigen in:
Fig. 1a eine perspektivische Explosionszeichnung der Beprobungsvorrichtung;
Fig. 1b eine Seitenansicht der Explosionszeichnung aus Figur 1a;
Fig. 2 einen Vollschnitt durch die Beprobungsvorrichtung;
Fig. 3 eine perspektivische Ansicht eines Fußteils;
Fig. 4a eine perspektivische Ansicht eines Keimträgers;
Fig. 4b eine Seitenansicht des Keimträgers aus Figur 4a;
Fig. 5a eine perspektivische Ansicht eines Schneidbrett-Unterteils;
Fig. 5b eine Draufsicht auf das Schneidbrett-Unterteil gemäß Figur 5a;
Fig. 5c eine Seitenansicht des Schneidbrett-Unterteils gemäß Figur 5a;
Fig. 6 eine perspektivische Ansicht eines Schneidbrett-Oberteils;
Fig. 7a eine perspektivische Ansicht einer Haube;
Fig. 7b eine Draufsicht auf die Haube gemäß Figur 7a;
Fig. 8a einen Vollschnitt durch eine um 180° gedrehte Beprobungsvorrichtung mit teilweise eingeschobener Schneide;
Fig. 8b einen Vollschnitt durch eine um 180° gedrehte Beprobungsvorrichtung mit gegeneinander verschobenen Schneidbrett-Oberteil und Schneidbrett-Unterteil; und
Fig. 9 mehrere aufeinander gestapelte Beprobungsvorrichtungen.

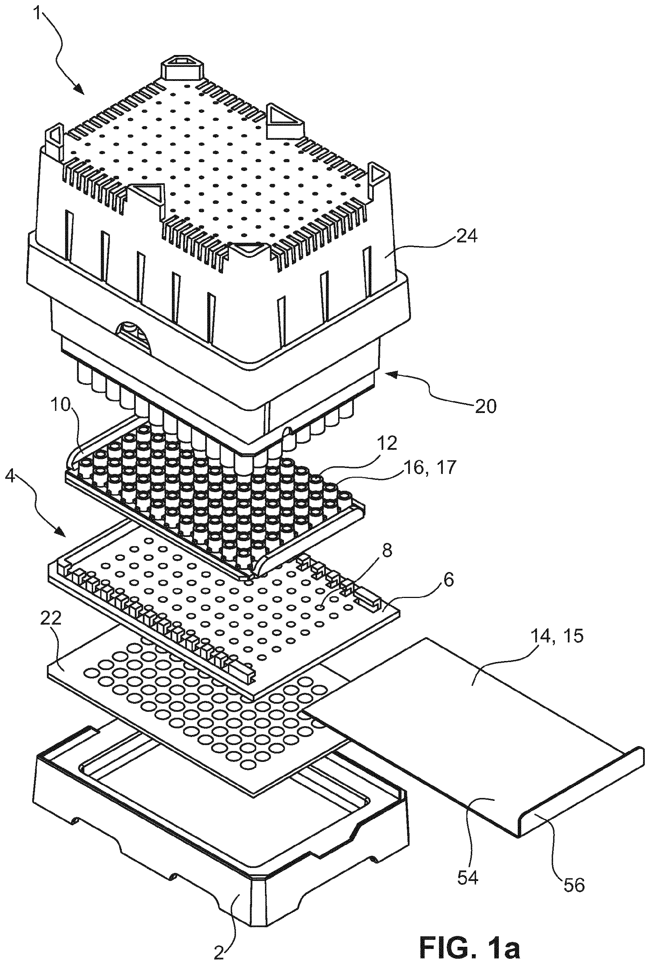

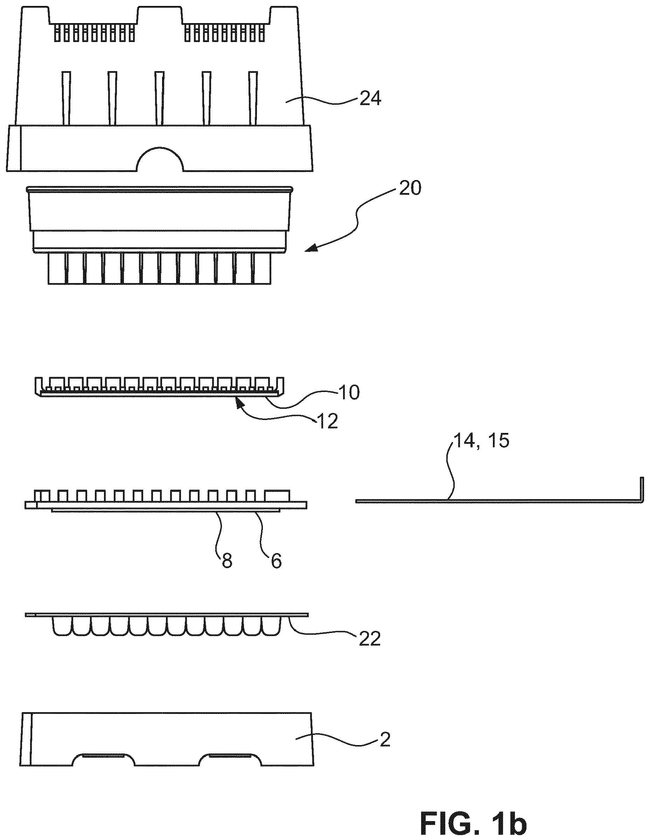

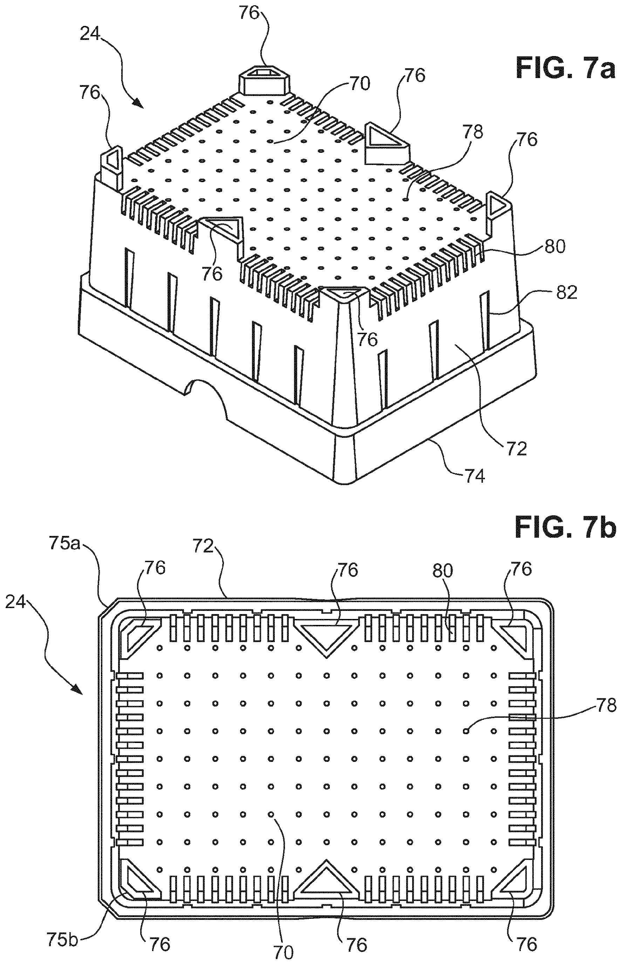

Eine Beprobungsvorrichtung 1 gemäß der vorliegenden Erfindung (Fig. 1a) weist ein Fußteil 2 und eine Schneideinrichtung 4 auf. Die Schneideinrichtung 4 weist in diesem Ausführungsbeispiel ein Schneidbrett-Unterteil 6 mit einer ersten Mehrzahl an Durchlässen 8 auf. Auf dem Schneidbrett-Unterteil 6 ist ein Schneidbrett-Oberteil 10 angeordnet, welches eine zweite Mehrzahl an Durchlässen 12 aufweist. Die Schneideinrichtung 4 weist weiterhin eine Schneide 14 auf, die in diesem Ausführungsbeispiel als Messer 15 ausgebildet ist. Die Schneide 14 ist zwischen dem Schneidbrett-Unterteil 6 und dem Schneidbrett-Oberteil 10 einschiebbar. Auf der mit Bezug auf Figur 1a oberen Seite des Schneidbrett-Oberteils 10 ist eine Mehrzahl an Positionierelemente 16 vorgesehen, die in diesem Ausführungsbeispiel als im Wesentlichen zylindrische Kragen 17 ausgebildet sind. Die Positionierelemente 16 sind dafür vorgesehen, Aufnahmebehälter 20 aufzunehmen und so gegenüber der Schneideinrichtung 4 zu positionieren. Unterhalb der Schneideinrichtung 4 aber oberhalb des Fußteils 2 ist ein Keimträger 22 angeordnet. Schließlich lässt sich in Figur 1a, 1b noch erkennen, dass oberhalb der Aufnahmebehälter 20 eine Haube 24 angeordnet ist, die später mit Bezug auf Figur 7a, 7b noch genauer erläutert werden wird.

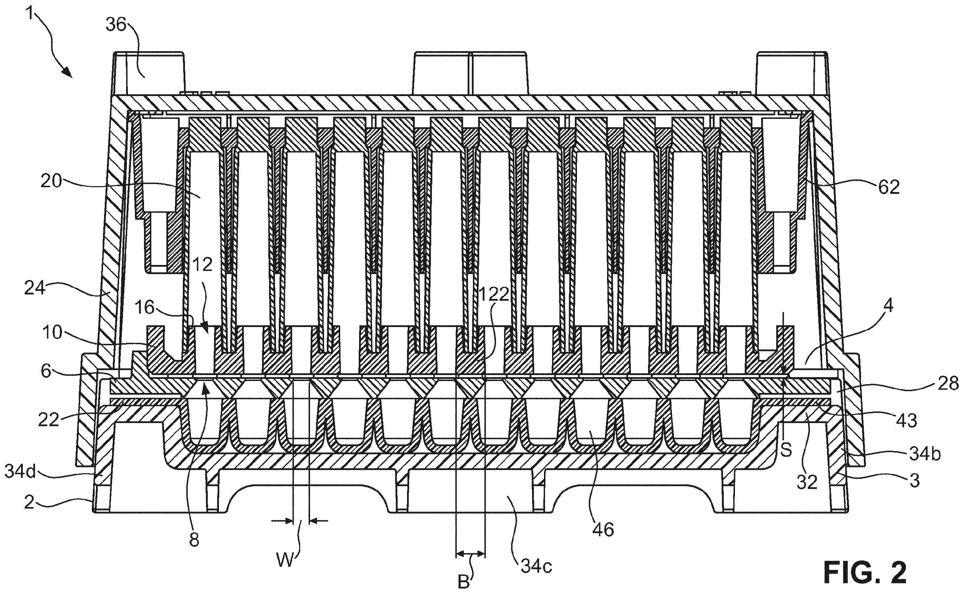

Die einzelnen Elemente werden auf- bzw. ineinander gestapelt und bilden im montierten Zustand eine Einheit, die durch das Fußteil 2 und die Haube 24 geschlossen ist. Dieser Aufbau lässt sich gut anhand von Figur 2 erkennen. Aus Figur 2 lässt sich entnehmen, dass die einzelnen Elemente direkt auf- bzw. ineinander gestapelt sind und mit der Haube 24 abgedeckt sind. Die Haube 24 ist optional und nicht zwingend für die Beprobungsvorrichtung 1 erforderlich.

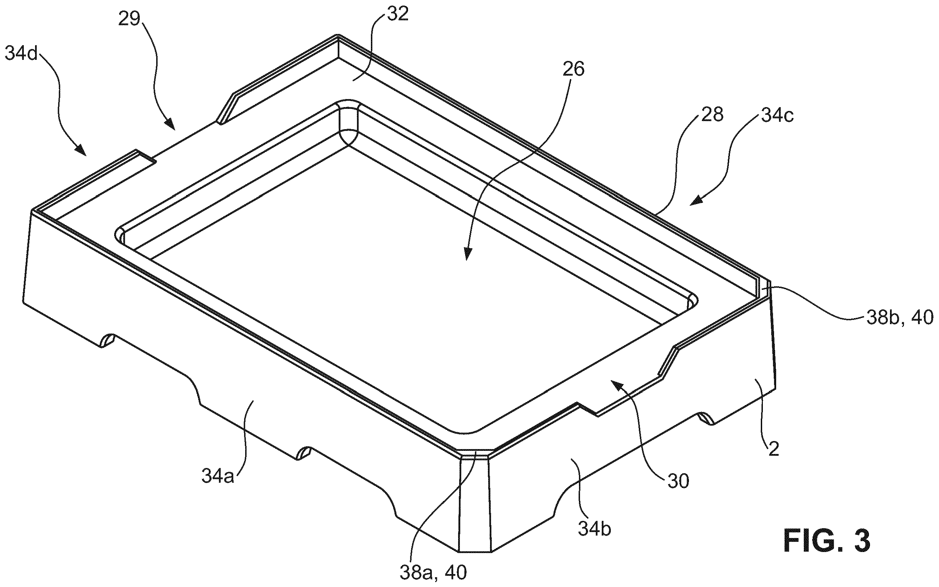

Das in Figur 2 unterste Element ist das Fußteil 2 (vgl. Figur 3). Das Fußteil 2 hat eine im Wesentlichen rechteckige Grundkonfiguration mit einer zentralen ebenfalls im Wesentlichen rechteckigen Vertiefung 26. Ferner weist das Fußteil 2 einen teilweise umlaufenden Rand 28 auf. An dem Rand 28 sind gegenüberliegend zwei Eingriffe 29, 30 vorgesehen, über die ein Benutzer einzelne Elemente der Beprobungsvorrichtung 1 von dem Fußteil 2 entnehmen kann. Zwischen dem Rand 28 und der Vertiefung 26 ist eine Auflagefläche 32 vorgesehen, auf der insbesondere der Keimträger 22 aufliegen kann. Das Fußteil 2 weist darüber hinaus vier leicht schräg angeordnete Seitenwände 34a, 34b, 34c, 34d auf, die so abgewinkelt sind, dass ein Fußteil 2 auf Stützfüßen 36 der Haube 24 (weiter unten noch genauer beschrieben) aufgestellt werden kann.

Der Rand 28 weist zwei Abflachungen 38a, 38b auf, die als Montagehilfseinrichtung 40 wirken. Auch diese werden im Zusammenhang mit den weiteren Bauteilen noch im Detail beschrieben werden. Das Fußteil 2 ist vorzugsweise aus einem wasserfesten Material, insbesondere Kunststoff. Es kann vorzugsweise als Spritzgussbauteil ausgebildet sein.

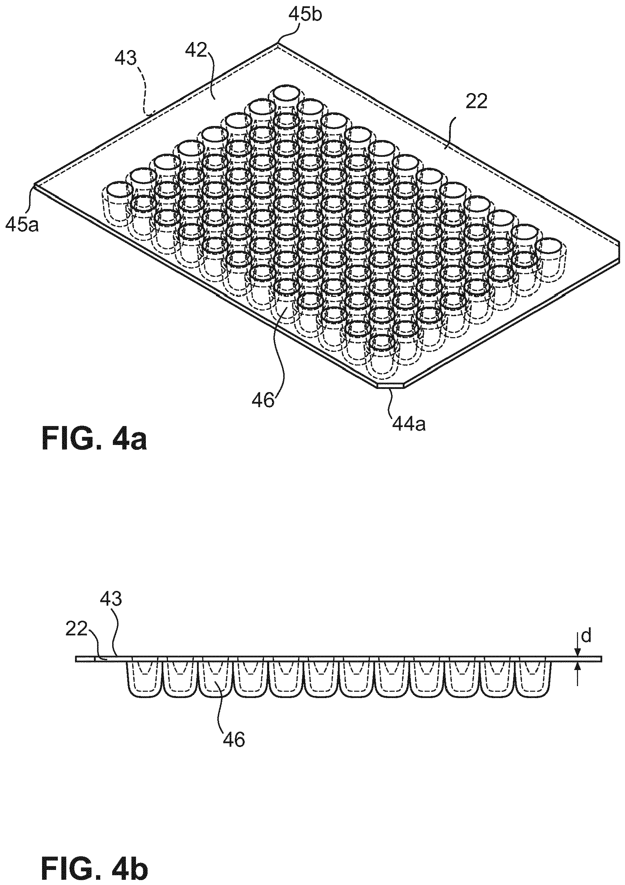

Auf dem Fußteil 2 wird der Keimträger 22 (vgl. Figur 4a, 4b) angeordnet. Der Keimträger 22 weist einen plattenförmigen Grundkörper 42 mit einem umlaufenden flachen Rand 43 auf. Mit dem flachen Rand 43 liegt der Keimträger 22 auf der Stützfläche 32 des Fußteils 2 auf. Wie in Figur 4 zu erkennen, weist der Rand 43 ebenfalls zwei Abflachungen 44a, 44b auf, die mit den Abflachungen 38a, 38b des Fußteil 2 korrespondieren. Die anderen Ecken 45a, 45b des Rands 43 sind rechtwinklig und nicht abgeflacht ausgebildet, sodass diese nicht an dem Ende des Fußteils 2 angeordnet werden können, an denen die Abflachung 38a, 38b vorgesehen sind. Ein seitenvertauschtes Montieren des Keimträgers 22 zum Fußteil 2 ist somit verhindert. Der Keimträger 22 kann nur in der Orientierung, die in Figur 4a gezeigt ist, mit dem Fußteil 2 in der Orientierung, die in Figur 3 gezeigt ist, gefügt werden.

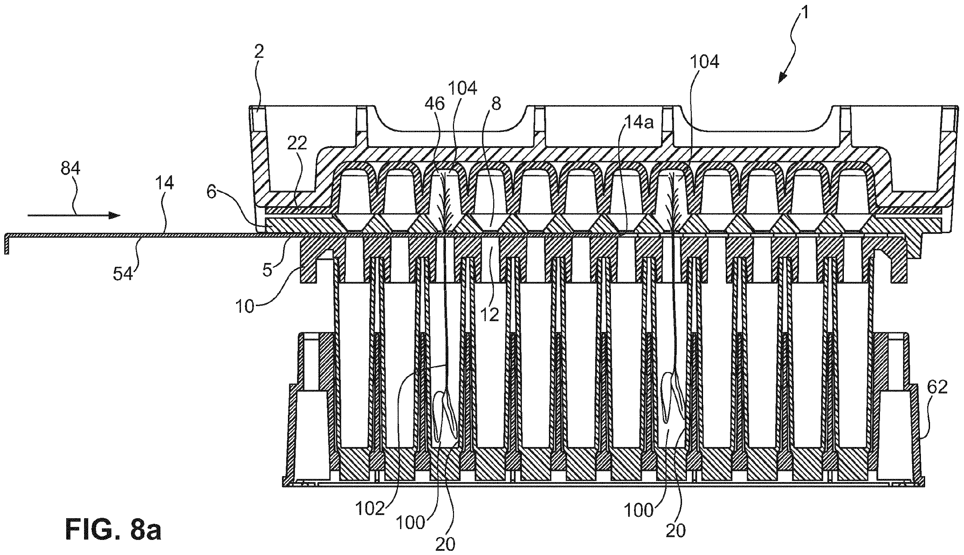

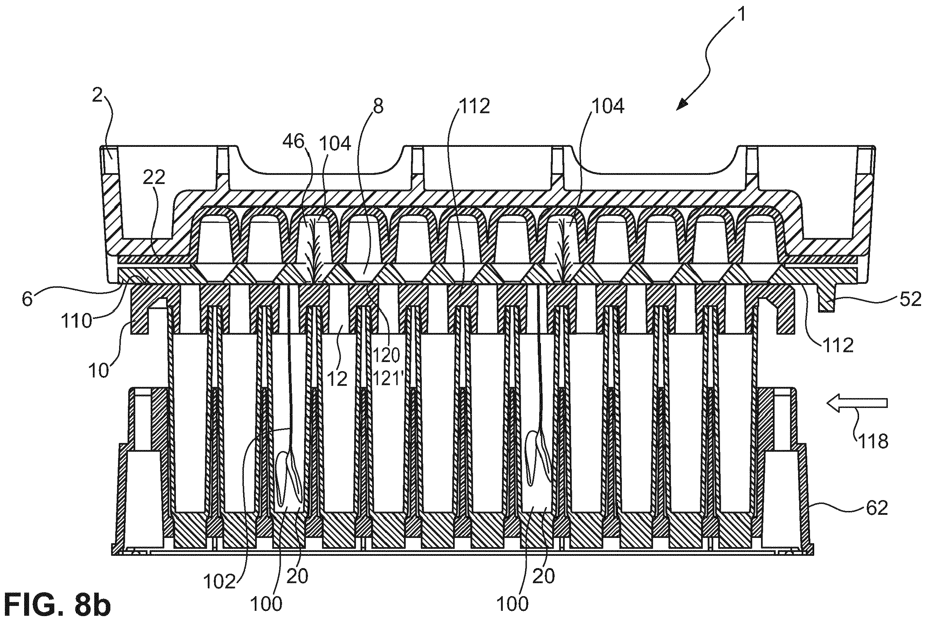

Der Keimträger 22 weist eine Vielzahl an Vertiefungen 46 auf, die hier im 96er-Well-Format angeordnet sind. D.h. die Vertiefungen 46 entsprechen dem üblichen 96er-Well-Laborformat und sind mit diesem kompatibel. Die Vertiefungen 46 sind so ausgebildet, dass sie einen Samen und/oder einen Keimling 100 (vgl. Fig. 8) aufnehmen können. Die Tiefe der Vertiefungen 46 korrespondiert mit der Vertiefung 26 des Fußteil 2, sodass der Keimträger 22 leicht in das Fußteil 2 einsetzbar ist (vgl. Fig. 2).

Der Keimträger 22 hat eine im Wesentlichen gleichmäßige Dicke d und ist vorzugsweise aus einem Altpapiermaterial gepresst. Auch ein anderes Zellstoffmaterial kann verwendet werden, wobei Altpapier aus ökologischen Gründen besonders bevorzugt ist. In dem vorliegenden Ausführungsbeispiel (Fig. 4a, 4b) ist die Dicke d des Keimträgers 22 1,2 mm. In diesem Ausführungsbeispiel hat der Keimträger 22 ein Volumen von 42,66 cm³ (ungepresst), eine Dichte von 0,36 g/cm³ und eine maximale Saugfähigkeit von 45,36 ml Wasser. Vor Verwendung des Keimträgers 22 wird dieser bei 180 °C nachgepresst, um eine gleichmäßige Oberfläche zu erhalten. Hierdurch wird die Dicke d, die ursprünglich 1,5 mm beträgt (Vol. 42,66 cm³) auf 1,2 mm reduziert. Es hat sich herausgestellt, dass dieses Volumen und Saugfähigkeit ausreichend ist, um Keimlinge 100 der Gattung Beta, insbesondere der Spezies *Beta vulgaris,* ca. eine Woche mit ausreichend Flüssigkeit zu versorgen.

Die Vertiefungen 46 sind so ausgebildet, dass die Keimlinge 100 nur nach oben wachsen können. Die Vertiefungen 46 sind untereinander nicht verbunden, sondern vollständig getrennt.

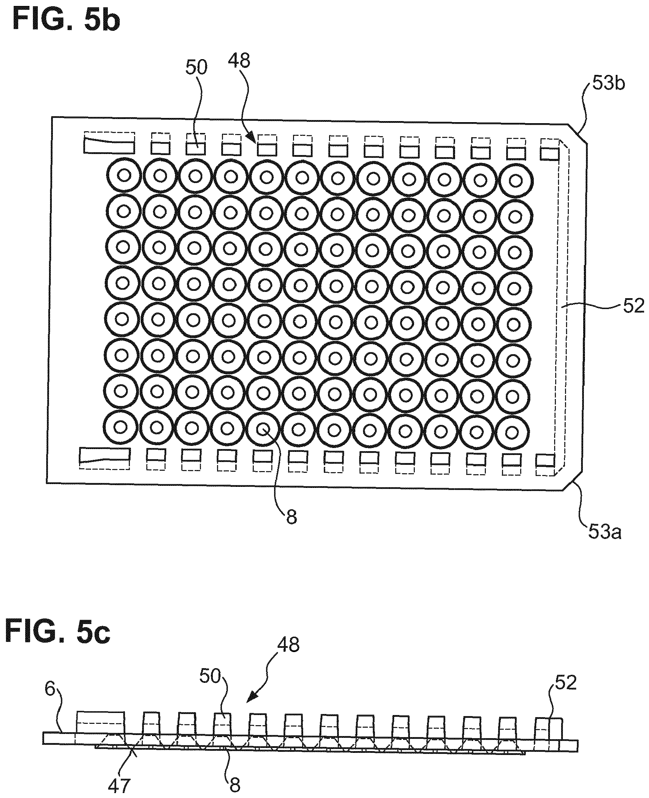

Auf dem Keimträger 22 liegt das Schneidbrett-Unterteil 6 auf. Das Schneidbrett-Unterteil 6 hat eine im Wesentlichen ebene untere Seite 47 (vgl. Figur 5c), die direkt auf dem Keimträger 22 aufliegt. Da sich der Keimträger 22 an seiner Unterseite in der Vertiefung 26 des Fußteils 2 abstützt, kann dieser, auch wenn er gewässert ist, nicht nach unten durchbiegen und somit seinen Kontakt zwischen Schneidbrett-Unterteil 6 und Keimträger 22 verlieren.

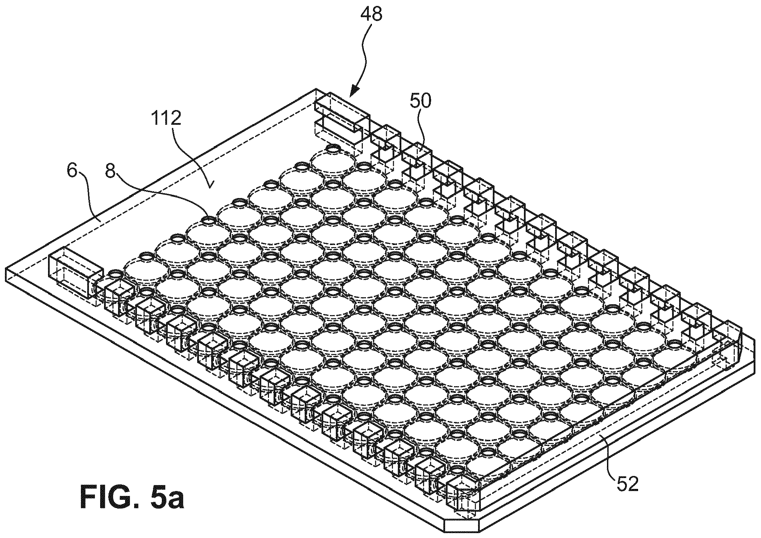

Das Schneidbrett-Unterteil 6 weist eine erste Mehrzahl an Durchlässen 8 auf, von denen in den Figuren 5a, 5b und 5c jeweils nur einer mit Bezugszeichen versehen ist. Die Durchlässe 8 der ersten Mehrzahl an Durchlässen fluchten im Wesentlichen mit Zentralachsen der Vertiefungen 46, sodass jeder Vertiefung 46 ein Durchlass 8 zugeordnet ist. Da das Schneidbrett-Unterteil 6 direkt auf dem Keimträger 22 aufliegt, können Keimlinge 100 aus den Vertiefungen 46 nur durch die Durchlässe 8 hindurch wachsen. Die Durchlässe 8 sind ferner so ausgebildet, dass sie sich weg vom Keimträger 22 verjüngen. Sie haben somit einen in etwa kegelstumpfförmigen Querschnitt (vgl. Fig. 2) der an seiner breitesten Stelle etwas breiter ist als die Öffnung der Vertiefung 46 der Keimträger 22, und an seiner engsten Stelle eine lichte Weite w aufweist. Die lichte Weite w ist so gewählt, dass Perikarp des Keimlings 100 abgestreift wird. Perikarp hat nur mütterliche DNA und würde eine nachfolgende DNA-Analyse verfälschen. Daher ist es wichtig, dass Perikarp vor der Analyse entfernt wird. Dies kann auch manuell vor einer Analyse erfolgen. Im Rahmen des vorliegenden Ausführungsbeispiels aber wird Perikarp abgestreift, indem die lichte Weite w begrenzt ist und zwar auf einen Wert zwischen 1 mm und 6 mm. In dem vorliegenden Ausführungsbeispiel beträgt die lichte Weite w etwa 3 mm, da sich eine Weite von ca. 3 mm als zweckdienlich für Keimlinge der Gattung Beta sp., insbesondere der Spezies *Beta vulgaris,* erwiesen hat.

An dem Schneidbrett-Unterteil 6 ist ferner eine Führung 48 zum Führen der Schneide 14 angeordnet. Die Führung 48 umfasst eine Mehrzahl an klauenförmigen Vorsprüngen 50, von denen in Figur 5a, 5b und 5c jeweils einer mit Bezugszeichen versehen ist. An einem axialen Ende des Schneidbrett-Unterteils 6 ist ferner ein Anschlag 52 vorgesehen, der zum Begrenzen des Bewegungswegs der Schneide 14 dient. Die klauenförmigen Vorsprünge 50 dienen einerseits zum Führen der Schneide 14 in der Ebene, d.h. parallel zum Schneidbrett-Unterteil 6, aber verhindern auch ein axiales Abheben der Schneide 14 beim Schneidvorgang. Dies ist insbesondere dann vorteilhaft, wenn die Keimlinge 100 eine gewisse Festigkeit haben und ein Schneiden mit einer gewissen Kraft ausgeführt werden muss.

Auch das Schneidbrett-Unterteil 6 weist Abflachungen 53a, 53b auf, die mit den Abflachungen 38a, 38b des Fußteils 2 korrespondieren. Der Rand 28 des Fußteils 2 hat eine solche Höhe, dass auch das Schneidbrett-Unterteil 6 im eingesetzten Zustand von dem Rand 28 umgeben wird (vgl. Fig. 2). Hierdurch wird eine gute Halterung des Schneidbrett-Unterteils 6 und damit der Schneideinrichtung 4 erreicht. Ein Verrutschen von Schneidbrett-Unterteil 6 zu Keimträger 22 kann vermieden werden, wodurch Kontamination verhindert werden kann.

Die Schneide 14 selbst ist am besten in den Figuren 1a und 1b zu sehen. Sie ist als Messer 15 ausgebildet und weist einen im Wesentlichen flachen Grundkörper 54 auf. Der Grundkörper 54 kann beispielsweise als Metallblech ausgebildet sein und eine solche Dimension haben, dass er im eingeschobenen Zustand sämtliche der Durchlässe 8 der ersten Mehrzahl an Durchlässen abdeckt. An einem axialen Ende weist der Grundkörper 54 einen Handgriff 56 auf, der in diesem Ausführungsbeispiel (Fig. 1a, 1b) nur als winkliger Vorsprung ausgebildet ist. Es kann ebenso vorgesehen sein, dass an dieser beispielsweise Stelle ein separater Handgriff aus Kunststoff vorgesehen ist.

Auf dem Schneidbrett-Unterteil 6 liegt das Schneidbrett-Oberteil 10 auf. Dieses liegt aber nicht vollflächig auf dem Schneidbrett-Unterteil 6 auf, sondern mit einem Spalt S (vgl. Fig. 2). Der Spalt S hat in diesem Ausführungsbeispiel eine Weite von wenigstens 0,7 mm, und dient dazu, dass die Schneide 14 eingeführt werden kann. Der Spalt S kann auch eine größere Weite als 0,7 mm haben, sollte aber nicht zu groß sein, dass ein Verwachsen von einem Keimling 100 aus einer Vertiefung 46 in einen lateral benachbarten Aufnahmebehälter 20 verhindert wird.

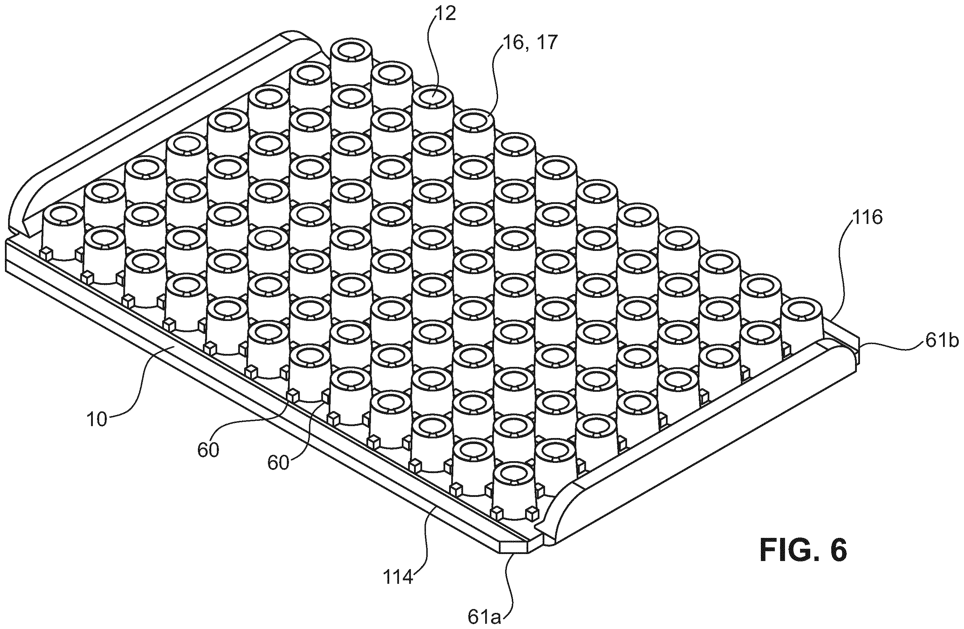

Die Durchlässe 12 der zweiten Mehrzahl an Durchlässen des Schneidbrett-Oberteils 10 sind wiederum mit den Durchlässen 8 der ersten Mehrzahl an Durchlässen des Schneidbrett-Unterteils 6 ausgerichtet. Insofern fluchten diese wie in Figur 2 gezeigt auch mit den Vertiefungen 46 des Keimträgers 22. Um die Durchlässe 12 herum ist jeweils ein Positionierelement 16 in Form eines Kragens 17 angeordnet. Am Fuß des Kragens 17 sind Abstandshalter 60 angeordnet (in Fig. 6 nur einer mit Bezugszeichen versehen), um die Aufnahmebehälter 20 zu beabstanden. Die Kragen 17 sind leicht konisch zulaufend und erstrecken sich im montierten Zustand in das Innere der jeweiligen Aufnahmebehälter 20 hinein (vgl. Fig. 2). Durch die axiale Überlappung der Kragen 17 und Aufnahmebehälter 20 wird ein seitliches Verwachsen von Keimlingen 100 von einer Vertiefung 46 in einen seitlich lateral versetzten Aufnahmebehälter 20 verhindert.

Auch an dem Schneidbrett-Oberteil 10 sind zwei Abflachungen 61a, 61b vorgesehen, die aber nicht mit den Abflachungen 38a, 38b des Fußteils 2 zusammenwirken. Vielmehr wirken die Abflachung 61a, 61b mit der Haube 24 zusammen, wie weiter unten beschrieben werden wird.

Die Aufnahmebehälter 20 sind in diesem Ausführungsbeispiel Teil eines Tube-Racks 62 und werden durch das Rack 62 gehalten. Die Aufnahmebehälter 20 sind also als Tubes oder Laborröhrchen ausgebildet. Das gesamte Tube-Rack 62 sitzt folglich auf dem Schneidbrett-Oberteil 10 auf, wobei sich jedes Laborröhrchen über einen Vorsprung 16 erstreckt. Die Keimlinge 100 können also direkt durch das Schneidbrett-Oberteil 10 in die entsprechenden Tubes hineinwachsen.

Die Haube 24 (vgl. Fig. 7a, 7b) weist ein Haubendach 70, sowie eine sich von diesem erstreckende Seitenwand 72 auf, die in einem Haubenrand 74 endet. Die Seitenwand 72 weist Abflachungen 75a, 75b auf, die mit den Abflachungen 61a, 61b des Schneidbrett-Oberteils 10 zusammenwirken. Hierdurch wird ein seitenvertauschtes Aufsetzen der Haube 24 verhindert.

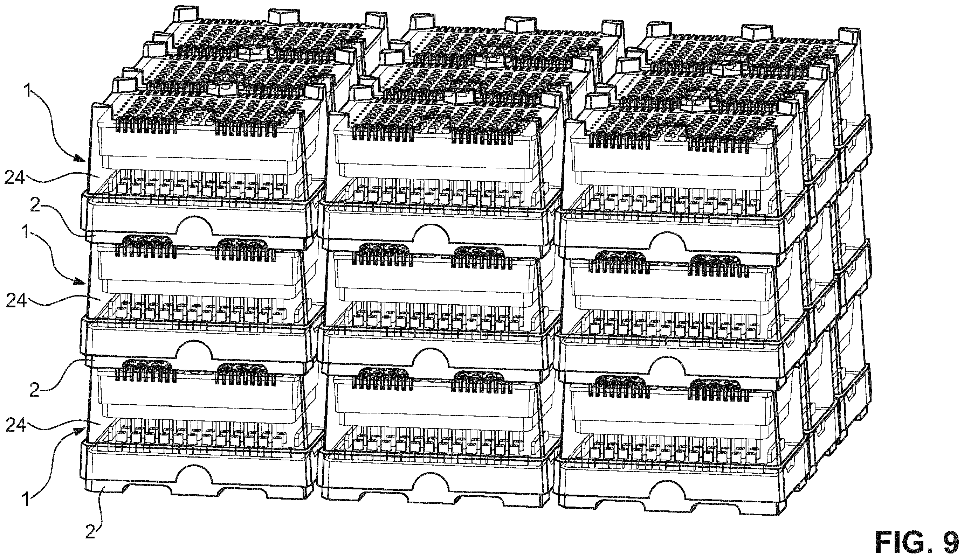

Die Haube 24 weist Stützfüße 76 auf, die an allen vier Ecken sowie zwei im mittleren Bereich vorgesehen sind. Die Stützfüße 76 dienen einerseits dazu die Haube 24 mit dem Haubendach 70 nach unten aufzustellen. Andererseits dienen die Stützfüße 76 auch dazu ein Fußteil 2 einer weiteren Beprobungsvorrichtung 1 aufzunehmen, um diese aufeinander zu stapeln (vgl. Fig. 9). Durch die Stützfüße 76 wird einerseits eine formschlüssige Halterung des Fußteils 2 der auf der Haube 24 gestapelten weiteren Beprobungsvorrichtung 1 erreicht. Andererseits beabstanden die Stützfüße 76 das Fußteil 2 auch in vertikaler Richtung von dem Haubendach 70, sodass eine Belüftung von Keimlingen 100 im Inneren der Haube 24 möglich ist.

Zur weiteren Belüftung weist die Haube 24 im Haubendach 70 Lüftungslöcher 78 auf (in Figur 7a, 7b nur jeweils eines mit Bezugszeichen versehen), sowie sowohl am Übergang zwischen Haubendach 70 und Seitenwand 72 Lüftungsschlitze 80 als auch direkt in die Seitenwand 72 eingebrachte Lüftungsschlitze 82.

Mit Bezug auf Figur 8a wird nun der Schneidprozesse beschrieben. Um die Keimlinge 100 zu zertrennen muss zunächst die Haube 24 abgenommen werden, sodass der Schlitz S zwischen dem Schneidbrett-Unterteil 6 und dem Schneidbrett-Oberteil 10 zugänglich ist. Anschließend ist es möglich, die Beprobungsvorrichtung 1 um 180° zu drehen, sodass die Aufnahmebehälter 20 mit ihren Öffnungen nach oben zeigen und die Keimlinge 100 auf dem Kopf stehen. Dies ist nicht zwingend erforderlich, sorgt aber dafür, dass die Keimlinge 100 nach dem Zertrennen direkt in die entsprechenden Aufnahmebehälter 20 fallen. Auf diese Weise ist der Schneidprozess, der in Figur 8a dargestellt ist, durchgeführt. Es soll aber verstanden werden, dass es auch möglich ist den Schneidprozess durchzuführen, wenn die Beprobungsvorrichtung 1 mit dem Fußteil 2 auf einem Boden aufgestellt ist.

Zum Zertrennen der Keimlinge 100 wird die Schneide 14 in den Spalt S eingeschoben, wie durch den Pfeil 84 (vgl. Fig. 8a) angedeutet. Die Schneide 14 hat eine Schneidkante 14a, die nach und nach die einzelnen Keimlinge 100 (in Fig. 8a beispielhaft nur zwei dargestellt) zertrennt. In der dargestellten Ausführungsform trennt die Schneide 14 die Keimlinge 100 am Spross 102, sodass die Wurzel 104 in der entsprechenden Vertiefung 46 des Keimträgers 22 verbleibt. Die Schneide 14 deckt mit ihrem Grundkörper 54 die einzelnen Durchlässe 8 der ersten Mehrzahl an Durchlässen und die Durchlässe 12 der zweiten Mehrzahl an Durchlässen ab, sodass auch kein Wurzelmaterial von der Wurzel 104 durch die Durchlässe 8, 12 in die Aufnahmebehälter 20 fallen kann. Dies ist anschaulich an dem in Figur 8 linken Keimling 100 zu sehen, der bereits durch die Schneide 14 zertrennt worden ist. Nachdem die Schneide 14 dann vollständig eingeschoben wurde, kann die Anordnung bestehend aus Fußteil 2, Keimträger 22, Schneidbrett-Unterteil 6, Schneidbrett-Oberteil 10, Schneide 14 sowie den Wurzeln 104 in den Vertiefungen 46 entnommen werden. Zurück bleiben die Aufnahmebehälter 20, in dem dargestellten Ausführungsbeispiel das Tube-Rack 62.

Figur 8b zeigt nun ein zweites Ausführungsbeispiel, bei dem keine Schneide 14 zum Zertrennen der Keimlinge 100 eingeschoben wird, sondern das Schneidbrett-Unterteil 6 und das Schneidbrett-Oberteil 10 gegeneinander verschoben werden, um so die jeweiligen Keimlinge 100 zu zertrennen.

Zwischen dem Schneidbrett-Oberteil 10 und dem Schneidbrett-Unterteil 6 ist in diesem Ausführungsbeispiel nicht notwendigerweise ein Spalt S gebildet (vgl. Fig. 8a). Es ist vielmehr möglich, dass das Schneidbrett-Oberteil 10 mit seiner unteren Oberfläche 110 auf einer oberen Oberfläche 112 des Schneidbrett-Unterteils 6 aufliegt. Das Schneidbrett-Oberteil 10 hat seitlich eine erste und eine zweite Schiene 114, 116 (vgl. Fig. 6), die mit der Führung 48 am Schneidbrett-Unterteil 6 zusammenwirken können. Das Schneidbrett-Oberteil 10 kann also an dem Schneidbrett-Unterteil 6 geführt und gegenüber diesem verschoben werden, wobei ein Abheben verhindert ist. Der Anschlag 52 dient auch als Anschlag für das Schneidbrett-Oberteil 10. Wenn dieses an dem Anschlag 52 anliegt, sind die Durchlässe 8 mit den Durchlässen 12 ausgerichtet.

In der um 180° gedrehten Stellung der Beprobungsvorrichtung 1 (vgl. Fig. 8b) kann nun das Schneidbrett-Oberteil 10 samt Aufnahmebehälter 20 (bzw. Rack 62) gegenüber dem Schneidbrett-Unterteil 6 (samt Keimträger 22 und Fußteil 2) verschoben werden, wie durch den Pfeil 118 angezeigt. Selbstverständlich ist es auch möglich, das Schneidbrett-Unterteil 6 gegenüber dem Schneidbrett-Oberteil 10 zu verschieben, bzw. beide um einen gewissen Betrag; entscheidend ist lediglich, dass diese relativ zueinander verschoben werden.

Die Durchlässe 8 der ersten Mehrzahl an Durchlässen sind leicht konisch bzw. kegelstumpfförmig gebildet (vgl. oben) und weisen an ihrer engsten Stelle einen Rand 120 auf, der in dieser Ausführungsform vorzugsweise als Schneide 121 ausgebildet ist. Dazu muss dieser nicht gesondert verstärkt werden, wobei ein verhältnismäßig kleiner Radius an der Kante bevorzugt ist. Werden nun das Schneidbrett-Oberteil 10 und das Schneidbrett-Unterteil 6 gegeneinander verschoben während sich ein Keimling 100 durch die Durchlässe 8, 12 hindurcherstreckt, wird der Keimling 100 im Bereich des Sprosses 102 durchtrennt. Das Schneidbrett-Oberteil 10 und das Schneidbrett-Unterteil 6 wirken hier als Scheren zusammen.

Die lichte Weite w (vgl. Fig. 2) der Durchlässe 8 der ersten Mehrzahl an Durchlässen ist in diesem Ausführungsbeispiel (Fig. 8b) kleiner als ein Durchmesser B (vgl. Fig. 2) eine Stegs 122 zwischen den Durchlässen 12 der zweiten Mehrzahl an Durchlässen. Dadurch ist es möglich, dass die Stege 122 in der verschobenen Position (vgl. Fig. 8b) des Schneidbrett-Oberteils 10 und des Schneidbrett-Unterteils 6 zueinander die Durchlässe 8 der ersten Mehrzahl an Durchlässen verschließen. Hierdurch kann Kontamination verhindert werden. Vorzugsweise weist die Beprobungsvorrichtung 1 einen weiteren Anschlag oder einen Indikator für die verschobene (wie in Fig. 8b gezeigte) Stellung des Schneidbrett-Oberteils 10 und Schneidbrett-Unterteils 6 zueinander auf. Dieser weitere Anschlag oder Indikator (in den Figuren nicht gezeigt) kann dem Schneidbrett-Oberteil 10, dem Schneidbrett-Unterteil 6, oder einem anderen Bauteil, beispielsweise dem Fußteil 2, ausgebildet sein. Es ist nicht erforderlich, dass dieser weitere Anschlag ein Weiterschieben vollständig verhindert, vielmehr ist ausreichend, wenn einem Bediener ein Hinweis gegeben wird, dass die verschobene Stellung erreicht wurde. Der weitere Anschlag kann also auch als leichte Vertiefung oder kleiner Vorsprung ausgebildet sein, der dem Bediener eine taktile Rückmeldung gibt. Ein Indikator kann beispielsweise jeweils eine an einem seitlichen Abschnitt von Schneidbrett-Oberteil 10 und Schneidbrett-Unterteil 6 aufgebrachte farbige Markierung umfassen, die durch das Verschieben in Übereinstimmung miteinander gebracht werden, sodass ein Bediener das Erreichen der korrekten Position visuell wahrnehmen kann.

In der verschobenen Stellung (Fig. 8b) kann nun die Anordnung mit Fußteil 2, Keimträger 22, Schneidbrett-Unterteil 6 und Schneidbrett-Oberteil 10 als Einheit von den Aufnahmebehältern 20 abgenommen und entfernt werden. Dabei bleiben die Vertiefungen 46 und die Durchlässe 8 der ersten Mehrzahl an Durchlässen verschlossen und Material aus den Vertiefungen 46 kann nicht durch die Durchlässe 8 fallen.

Alternativ ist es auch möglich, ein Trennelement (in den Figuren nicht gezeigt) zwischen Schneidbrett-Oberteil 10 und Schneidbrett-Unterteil 6 einzuschieben, um die Durchlässe 8 sicher zu verschließen. Ein solches Trennelement kann in seiner Konfiguration im Wesentlichen der Schneide 14 bzw. dem Messer 15 entsprechen, wobei es aus einem weicheren Material, wie einem dünnen Kunststoff, gebildet sein kann, da es keine Schnittreaktionskräfte aufnehmen muss.

Figur 9 zeigt schließlich eine Anordnung aus einer Mehrzahl an Beprobungsvorrichtungen 1 gemäß der vorliegenden Offenbarung. In Figur 9 sind insgesamt 27 Beprobungsvorrichtungen 1 gezeigt, wobei jeweils drei Beprobungsvorrichtungen 1 aufeinander gestapelt sind. So steht jede Beprobungsvorrichtungen 1 mit ihrem Fußteil 2 auf der Haube 24 einer darunter stehenden Beprobungsvorrichtungen 1. Auf diese Weise können Keimlinge 100 platzsparend getestet werden.

## Patentansprüche

1. Beprobungsvorrichtung (1) zum Anziehen und Beproben von Keimlingen (100) von Pflanzen, mit
einem Fußteil (2), und
einer Schneideinrichtung (4) zum Zertrennen von Keimlingen (100) oberhalb der Wurzel (104), vorzugsweise im Bereich des Sprosses (102), besonders bevorzugt im Bereich des Hypokotyls,
wobei die Schneideinrichtung (4) ein Schneidbrett-Unterteil (6) und ein auf dem Schneidbrett-Unterteil (6) angeordnetes Schneidbrett-Oberteil (10) aufweist, die zum Zertrennen der Keimlinge (100) gegeneinander verschiebbar sind oder zwischen denen eine Schneide (14) zum Zertrennen der Keimlinge (100) einschiebbar ist,
wobei das Schneidbrett-Unterteil (6) eine erste Mehrzahl an Durchlässen (8) und das Schneidbrett-Oberteil (10) eine zweite Mehrzahl an Durchlässen (12) aufweist, und die erste Mehrzahl an Durchlässen (8) mit der zweiten Mehrzahl an Durchlässen (12) ausgerichtet sind,
wobei sich die Durchlässe (8) der ersten Mehrzahl an Durchlässen im Schneidbrett-Unterteil (6) zum Schneidbrett-Oberteil (10) hin verjüngen, und das Schneidbrett-Oberteil (10) an wenigstens einem der Durchlässe (12) der zweiten Mehrzahl an Durchlässen wenigstens ein Positionierelement (16) zum Positionieren von Aufnahmebehältern (20) zum Aufnehmen der abgetrennten Sprosse (102) oder Sprossteile der Keimlinge (100) aufweist.

2. Beprobungsvorrichtung nach Anspruch 1, ferner aufweisend einen Keimträger (22) für Samen oder Keimlinge (100), der zwischen dem Fußteil (2) und der Schneideinrichtung (4) angeordnet ist und vorzugsweise aus einem saugfähigen Material zum Speichern von Flüssigkeit gebildet ist.

3. Beprobungsvorrichtung nach Anspruch 2, wobei der Keimträger (22) eine dritte Mehrzahl an Vertiefungen (46) aufweist, wobei Zentralachsen der dritten Mehrzahl an Vertiefungen (46) mit der ersten Mehrzahl an Durchlässen (8) fluchten.

4. Beprobungsvorrichtung nach Anspruch 2 oder 3, wobei die Vertiefungen (46) im 24er-Well-Format, 48er-Well-Format, 96er-Well-Format, 192er-Well-Format oder 384er-Well-Format angeordnet sind.

5. Beprobungsvorrichtung nach einem der vorstehenden Ansprüche, wobei die Aufnahmebehälter (20) als einseitig offene Laborröhrchen (Tubes) ausgebildet und in einem Halter (62) (Rack) mit ihrer Öffnung proximal zu dem Schneidbrett-Oberteil (10) gehalten sind.

6. Beprobungsvorrichtung nach einem der vorstehenden Ansprüche, wobei die Schneideinrichtung (4) eine Führung (48) für die Schneide (14) oder eine Führung (48) für das Verschieben des Schneidbrett-Oberteil (10) zu dem Schneidbrett-Unterteil (6) aufweist.

7. Beprobungsvorrichtung nach einem der vorstehenden Ansprüche, wobei die Schneide (14) so dimensioniert ist, dass jeder Durchlass (8) der ersten Mehrzahl an Durchlässen (8) bei einem Einschieben der Schneide (14) zumindest einmalig vollständig abdeckbar ist und/oder die Schneide (14) so dimensioniert ist, dass in einem eingeschobenen Zustand die erste Mehrzahl an Durchlässen (8) vollständig abdeckbar ist.

8. Beprobungsvorrichtung nach einem der vorstehenden Ansprüche, wobei die Durchlässe (8) der ersten Mehrzahl an Durchlässen einen Querschnitt mit einer lichten Weite (W) haben, die ausgewählt ist zum Abstreifen von Perikarp von den Keimlingen (100).

9. Beprobungsvorrichtung nach Anspruch 8, wobei die lichte Weite (W) in einem Bereich von 1 mm bis 6 mm liegt, vorzugsweise etwa 3 mm beträgt.

10. Beprobungsvorrichtung nach einem der vorstehenden Ansprüche, wobei die Positionierelemente (16) als ringförmiger Kragen (17) um die jeweiligen Durchlässe (12) herum ausgebildet sind.

11. Beprobungsvorrichtung nach einem der vorstehenden Ansprüche, wobei die Positionierelemente (16) Abstandshalter (60) zum Beabstanden der Aufnahmebehälter (20) von dem Schneidbrett-Oberteil (10) aufweisen.

12. Beprobungsvorrichtung nach einem der vorstehenden Ansprüche, ferner aufweisend eine Haube (24) zum Abdecken wenigstens der Schneideinrichtung (4) samt Keimlingen (100).

13. Beprobungsvorrichtung nach einem der vorstehenden Ansprüche, ferner aufweisend eine Montagehilfseinrichtung (40) die ein seitenvertauschtes Montieren wenigstens der Schneideinrichtung (4) zum Fußteil (2) verhindert.

14. Verfahren zum Anziehen und Beproben von Keimlingen (100) mit einer Beprobungsvorrichtung (1) nach einem der vorstehenden Ansprüche, umfassend die Schritte:
- Bereitstellen oder Anziehen von Keimlingen (100) vorzugsweise aus Samen;
- Warten bis sich die Keimlinge (100) durch die erste als auch durch die zweite Mehrzahl an Durchlässen (8, 12) durch erstrecken;
- Einschieben der Schneide (14) zwischen dem Schneidbrett-Unterteil (6) und dem Schneidbrett-Oberteil (10) zum Zertrennen der Keimlinge (100) oder Verschieben des Schneidbrett-Oberteils (10) gegenüber dem Schneidbrett-Unterteil (6) zum Zertrennen der Keimlinge (100);
- Aufnehmen von abgetrennten Sprossen (102) oder Sprossteilen der Keimlinge (100) in jeweils einem Aufnahmebehälter (20); und
- Entnehmen der Aufnahmebehälter (20) aus der Beprobungsvorrichtung (1).

15. Verwendung einer Beprobungsvorrichtung (1) nach einem der Ansprüche 1 bis 13 zum Anziehen von Keimlingen einer Pflanze und/oder Beproben von Keimlingen (100) einer Pflanze, wobei die Pflanze vorzugsweise ausgewählt ist aus den Gattungen: Hordeum, Sorghum, Saccharum, Zea, Setaria, Oryza, Triticum, Secale, Triticale, Malus, Brachypodium, Aegilops, Daucus, Beta, Eucalyptus, Nicotiana, Solanum, Coffea, Vitis, Erythrante, Genlisea, Cucumis, Marus, Arabidopsis, Crucihimalaya, Cardamine, Lepidium, Capsella, Olmarabidopsis, Arabis, Brassica, Eruca, Raphanus, Citrus, Jatropha, Populus, Medicago, Cicer, Cajanus, Phaseolus, Glycine, Gossypium, Astragalus, Lotus, Torenia, Allium, und/oder Helianthus, vorzugsweise ist die Pflanze ausgewählt aus den Spezies: *Hordeum vulgare, Hordeum bulbusom, Sorghum bicolor, Saccharum officinarium, Zea* spp., umfassend *Zea mays, Setaria italica, Oryza minuta, Oryza sativa, Oryza australiensis, Oryza alta, Triticum aestivum, Triticum durum, Secale cereale,* Triticale, *Malus domestica, Brachypodium distachyon, Hordeum marinum, Aegilops tauschii, Daucus glochidiatus, Beta* spp., umfassend *Beta vulgaris, Daucus pusillus, Daucus muricatus, Daucus carota, Eucalyptus grandis, Nicotiana sylvestris, Nicotiana tomentosiformis, Nicotiana tabacum, Nicotiana benthamiana, Solanum lycopersicum, Solanum tuberosum, Coffea canephora, Vitis vinifera, Erythrante guttata, Genlisea aurea, Cucumis sativus, Marus notabilis, Arabidopsis arenosa, Arabidopsis lyrata, Arabidopsis thaliana, Crucihimalaya himalaica, Crucihimalaya wallichii, Cardamine nexuosa, Lepidium virginicum, Capsella bursa pastoris, Olmarabidopsis pumila, Arabis hirsute, Brassica napus, Brassica oleracea, Brassica rapa, Raphanus sativus, Brassica juncacea, Brassica nigra, Eruca vesicaria subsp. sativa, Citrus sinensis, Jatropha curcas, Populus trichocarpa, Medicago truncatula, Cicer yamashitae, Cicer bijugum, Cicer arietinum, Cicer reticulatum, Cicer judaicum, Cajanus cajanifolius, Cajanus scarabaeoides, Phaseolus vulgaris, Glycine max, Gossypium* sp., *Astragalus sinicus, Lotus japonicas, Torenia fournieri, Allium cepa, Allium fistulosum, Allium sativum, Helianthus annuus, Helianthus tuberosus und*/*oder Allium tuberosum,* besonders bevorzugt sind *Beta vulgaris, Zea mays, Triticum aestivum, Hordeum vulgare, Secale cereale, Helianthus annuus, Solanum tuberosum, Sorghum bicolor, Brassica rapa, Brassica napus, Brassica juncacea, Brassica oleracea, Raphanus sativus, Oryza sativa, Glycine max* und/oder *Gossypium* sp..
